# EUROPEAN PATENT APPLICATION

(11) **EP 4 369 302 A1**
(43) Date of publication of application: **15.05.2024**
(21) Application number: 23205813.1
(22) Date of filing: 25.10.2023
(51) Int. Cl.: G06T 11/00, G06T 5/70

(54) **METHODS AND SYSTEMS FOR METAL ARTIFACTS CORRECTION**

(30) Priority: 25.10.2022 CN 202211307598
(71) Applicant: Shanghai United Imaging Healthcare Co., Ltd., Shanghai, 201807 (CN)
(72) Inventor: Zhou, Haihua, Shanghai, 201807 (CN); Yan, Jing, Shanghai, 201807 (CN); Cui, Kai, Shanghai, 201807 (CN)
(74) Representative: Wang, Bo

(57) **Abstract**

A method and system for metal artifacts correction are provided. The method may include obtaining an image to be processed including metal portion; determining initial projection data by performing data restoration on the metal portion of the image to be processed; determining target projection data by filtering the initial projection data; and determining a target image based on the target projection data.

## Description

### CROSS-REFERENCE TO RELATED APPLICATIONS

This application claims priority to the Chinese Patent Application No. 202211307598. X, filed on October 25, 2022, the contents of which are hereby incorporated by reference.

### TECHNICAL FIELD

The present disclosure relates to an image processing technology field, in particular, relates to systems, methods, and mediums for metal artifacts correction.

### BACKGROUND

Due to a high attenuation of metal to rays (e.g., X-rays), a proportion of the rays absorbed by the metal is relatively large, and detectors receive few rays. Therefore, in clinical applications using radiographic imaging, a metal implant (e.g., metal dentures, bone nails, etc.) carried by patients absorbs the rays, resulting in incomplete data collection of the metal implant, and causing serious metal artifacts (i.e., stripe artifacts) in reconstructed images, which affects diagnostic accuracy greatly.

Therefore, it is desirable to provide a method for metal artifacts correction in medical images that can effectively remove the metal artifacts in the medical images and improve diagnostic accuracy.

### SUMMARY

One aspect of embodiments of the present disclosure may provide a system for metal artifacts correction. The system may include at least one storage medium including a set of instructions; and at least one processor in communication with the at least one storage medium, wherein when executing the set of instructions, the at least one processor is directed to cause the system to perform operations including: obtaining an image to be processed including a metal portion; determining initial projection data by performing data restoration on the metal portion of the image to be processed; determining target projection data by filtering the initial projection data; and determining a target image based on the target projection data.

In some embodiments, the determining the target projection data by filtering the initial projection data may include obtaining the target projection data by performing low-pass filtering on the initial projection data.

In some embodiments, the obtaining the target projection data by performing the low-pass filtering on the initial projection data may include obtaining restoration data corresponding to the metal portion in the initial projection data; and obtaining the target projection data by performing the low-pass filtering on the restoration data corresponding to the metal portion.

In some embodiments, the determining the target projection data by filtering the initial projection data may include determining a target filter based on the initial projection data; and determining the target projection data by filtering the initial projection data using the target filter.

In some embodiments, the determining the target filter based on the initial projection data may include determining the target filter based on the initial projection data using a trained first model.

In some embodiments, the determining the target projection data by filtering the initial projection data may include obtaining object information of an object corresponding to the image to be processed, the object information including at least one of personal information, a scanning position, a scanning parameter, or historical scanning data; determining a target filter based on the object information; and determining the target projection data by filtering the initial projection data using the target filter.

In some embodiments, the determining the target filter based on the object information may include determining the target filter based on the object information using a trained second model.

In some embodiments, the determining the target projection data by filtering the initial projection data may include determining a target filter based on a data restoration process corresponding to the initial projection data; and determining the target projection data by filtering the initial projection data using the target filter.

In some embodiments, the determining the target filter based on the data restoration process corresponding to the initial projection data may include determining the target filter based on the data restoration process corresponding to the initial projection data using a trained third model.

In some embodiments, the determining the target projection data by filtering the initial projection data may include determining a target frequency band based on at least one of object information of an object corresponding to the image to be processed, a data restoration process corresponding to the initial projection data, or the initial projection data; wherein the object information may include at least one of personal information, a scanning position, a scanning parameter, or historical scanning data; and obtaining the target projection data by filtering out data higher than the target frequency band from the initial projection data.

In some embodiments, the determining the initial projection data by performing the data restoration on the metal portion of the image to be processed may include obtaining object information of an object corresponding to the image to be processed, wherein the object information includes at least one of personal information, a scanning position, a scanning parameter, or historical scanning data; determining a target restoration process based on the object information; and obtaining the initial projection data by performing the data restoration on the metal portion of the image to be processed based on the target restoration process.

In some embodiments, the determining the target restoration process based on the object information may include determining the target restoration process based on the object information using a trained restoration process determination model; wherein the restoration process determination model may be trained based on sample data, and the sample data may include sample object information of different sample objects and a reference data restoration process corresponding to the sample objection information of each sample object.

In some embodiments, the reference data restoration process may be obtained based on the following operations: obtaining at least one candidate data restoration process of the sample object; for each of the at least one candidate data restoration process, determining a score of sample initial projection data or sample target projection data corresponding to the candidate data restoration process; and determining the reference data restoration process of the sample object based on the score of the sample initial projection data or the sample target projection data.

In some embodiments, the determining the initial projection data by performing the data restoration on the metal portion of the image to be processed may include determining a metal image based on the image to be processed; determining a metal trajectory based on the metal image; and obtaining the initial projection data by performing the data restoration based on the metal trajectory.

In some embodiments, the metal trajectory may include a metal trajectory sinogram.

In some embodiments, the image to be processed may include a radiographic image.

Another aspect of embodiments of the present disclosure may provide a method for metal artifacts correction. The method may include obtaining an image to be processed including a metal portion; determining initial projection data by performing data restoration on the metal portion of the image to be processed; determining target projection data by filtering the initial projection data; and determining a target image based on the target projection data.

In some embodiments, the determining the target projection data by filtering the initial projection data may include obtaining the target projection data by performing low-pass filtering on the initial projection data.

In some embodiments, the obtaining the target projection data by performing the low-pass filtering on the initial projection data may include obtaining restoration data corresponding to the metal portion in the initial projection data; and obtaining the target projection data by performing the low-pass filtering on the restoration data corresponding to the metal portion.

Another aspect of embodiments of the present disclosure may provide a non-transitory computer readable medium. The non-transitory computer readable medium may comprise a set of instructions, wherein when executed by at least one processor, the set of instructions direct the at least one processor to perform a method for metal artifacts correction, the method including obtaining an image to be processed including a metal portion; determining initial projection data by performing data restoration on the metal portion of the image to be processed; determining target projection data by filtering the initial projection data; and determining a target image based on the target projection data.

### BRIEF DESCRIPTION OF THE DRAWINGS

The present disclosure is further describable in terms of exemplary embodiments. These exemplary embodiments are describable in detail with reference to the drawings. These embodiments are non-limiting exemplary embodiments, in which like reference numerals represent similar structures throughout the several views of the drawings, and wherein:
FIG. 1 is a schematic diagram illustrating an exemplary application scenario of a system for metal artifacts correction according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary modules of a system for metal artifacts correction according to some embodiments of the present disclosure;
FIG. 4 is a flowchart illustrating an exemplary process for metal artifacts correction according to some embodiments of the present disclosure;
FIG. 5(a) is a schematic diagram illustrating an exemplary projection data image including metal portion according to some embodiments of the present disclosure;
FIG. 5(b) is a schematic diagram illustrating an exemplary reconstructed image including metal portion according to some embodiments of the present disclosure;
FIG. 6(a) is a schematic diagram illustrating an exemplary reconstructed image without filtering according to some embodiments of the present disclosure;
FIG. 6(b) is a schematic diagram illustrating an exemplary filtered reconstructed image according to some embodiments of the present disclosure
FIG. 7 is a schematic diagram illustrating an exemplary process of filtering projection data according to some embodiments of the present disclosure;
FIG. 8 is a schematic diagram illustrating an exemplary process of determining a target filter according to some embodiments of the present disclosure;
FIG. 9 is a schematic diagram illustrating an exemplary process of determining a target filter according to other embodiments of the present disclosure;
FIG. 10 is a schematic diagram illustrating an exemplary process of determining a target filter according to other embodiments of the present disclosure;
FIG. 11 is a schematic diagram illustrating an exemplary process of determining a target frequency band according to some embodiments of the present disclosure;
FIG. 12 is a schematic diagram illustrating an exemplary process of determining a target restoring process according to some embodiments of the present disclosure;
FIG. 13 is a schematic diagram illustrating an exemplary process of determining a reference data restoring process according to some embodiments of the present disclosure;
FIG. 14 is a schematic diagram illustrating an exemplary process of determining data restoration according to some embodiments of the present disclosure; and
FIG. 15(a) is a schematic diagram illustrating an exemplary metal image according to some embodiments of the present disclosure;
FIG. 15(b) is a schematic diagram illustrating an exemplary metal trajectory sinogram according to some embodiments of the present disclosure; and
FIG. 15(c) is a schematic diagram illustrating exemplary projection data according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been describable at a relatively high-level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but to be accorded the widest scope consistent with the claims.

It will be understood that the term "system," "engine," "unit," "module," and/or "block" used herein are one method to distinguish different components, elements, parts, sections or assemblies of different levels in ascending order. However, the terms may be displaced by other expressions if they achieve the same purpose.

Typically, the words "module," "unit," or "block" used here refer to the logic embodied in hardware or firmware, or a collection of software instructions. The modules, units, or blocks described in this article can be implemented as software and/or hardware, and can be stored in any type of non temporary computer-readable medium or another storage device. In some embodiments, software modules/units/blocks can be compiled and linked into executable programs. It should be understood that software modules can be called from other modules/units/blocks or from themselves, and/or in response to detected events or interrupts. Software modules/units/blocks configured for execution on computing devices can be provided on computer readable media (such as optical discs, digital video discs, flash drives, disks, or any other tangible media), or as digital downloads (initially stored in compressed or installable format, requiring installation, decompression, or decryption before execution). The software code here can be partially or completely stored in the storage device of the computing device executing the operation, and applied to the operation of the computing device. Software instructions can be embedded in firmware, such as EPROM. It should also be understood that hardware modules/units/blocks may be included in connected logical components, such as gates and triggers, and/or may include programmable units, such as programmable gate arrays or processors. The modules/units/blocks or computing device functions described here can be implemented as software modules/units/blocks, but can be represented by hardware or firmware. Usually, the modules/units/blocks described here refer to logical modules/units/blocks that can be combined with other modules/units/blocks or divided into submodules/subunits/blocks, even though they are physical organizations or storage devices. This description can be applied to a system, engine, or part of it.

It should be understood that unless the context otherwise clearly states, when a unit, engine, module, or block is referred to as "connected" or "coupled" to another unit, engine, module, or block, it can be directly connected, coupled, or communicated with other units, engines, modules, or blocks, or there may be intermediate units, engines, modules, or blocks. In this manual, the term "and/or" may include any one or more related listed items or combinations thereof. In this manual, the term "image" can refer to two-dimension (2D) images, three-dimension (3D) images, or four-dimension (4D) images.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

As shown in this specification and the claims, unless an exception is explicitly indicated above or below, the words "one," "a," "an," and/or "the" are not specifically referring to the singular, but may also include the plural. Generally, the terms "including" and "containing" only indicate the steps and elements that have been clearly identified, and these steps and elements do not constitute an exclusive list. The method or device may also include other steps or elements.

The flowcharts are used in this specification to illustrate the operations performed by the system according to the embodiments of this specification. The relevant description is to help better understand magnetic resonance imaging methods and/or systems. It should be understood that the preceding or following operations may not be performed accurately in sequence. On the contrary, each step can be processed in reverse order or simultaneously. At the same time, other operations can also be added to these processes, or a step or several operations can be removed from these processes.

Due to a high attenuation of metal to rays (e.g., X-rays), a proportion of the rays absorbed by the metal may be relatively large, and detectors may receive few rays. Therefore, in clinical applications of medical imaging using rays, a metal implant carried by patients (e.g., metal dentures, bone nails, etc.) may absorb the rays, resulting in incomplete data collection (e.g., a relatively weak signal collected at the metal implant or collecting data corresponding to a portion of the metal implant) of the metal implant, and a final projection value may differ significantly from a true value (e.g., projection data collected at a corresponding position without the metal implant). On a sinogram, data corresponding to a metal portion may generally appear as a blank band without actual information, i.e., incomplete data. In a reconstructed image, the data corresponding to the metal portion may generally appear as artifacts with severe stripe, low black, or highlight, which seriously affects the image quality and reduce the diagnostic significance of the image.

A data restoring process such as interpolation may be used to restore corresponding data of the metal portion, and image reconstruction may be performed based on the restored projection data. However, during the data restoring process, some high frequency data may be introduced. If the restored projection data is directly used for the image reconstruction, high frequency artifacts may be generated in the reconstructed image and the image quality may be affected.

A method and system for metal artifacts correction may be provided in the embodiments of the present disclosure, initial projection data may be determined by performing data restoration on a metal portion of an image to be processed image; target projection data may be determined by filtering the initial projection data; and a target image may be determined based on the target projection data. The method may not only remove the metal artifacts in the reconstructed image, but also avoid high frequency artifacts caused by the data restoration, which can effectively improve the image quality.

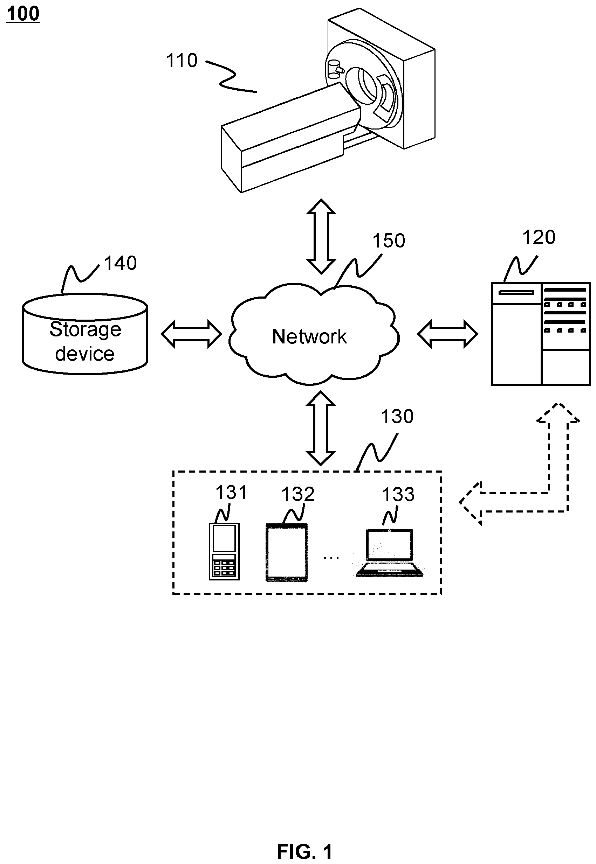

FIG. 1 is a schematic diagram illustrating an exemplary application scenario of a system for metal artifacts correction according to some embodiments of the present disclosure.

As shown in FIG. 1, in some embodiments, a medical system 100 may include an imaging device 110, a processing device 120, a terminal device 130, a storage device 140, and a network 150. In some embodiments, various components in the medical system 100 may be connected with each other through the network 150 or directly connected without the network 150. For example, the imaging device 110 and the terminal device 130 may be connected through the network 150. As another example, the imaging device 110 and the processing device 120 may be connected through the network 150 or directly connected without the network 150. As a further example, the processing device 120 and the terminal device 130 may be connected through the network 150 or directly connected without the network 150 (as shown by a dashed arrow in the figure).

The imaging device 110 may be configured to scan an object or a portion of the object located within a detection region and generate an image related to the object or a portion of the object (e.g., an image to be processed). In some embodiments, the object may be biological or non-biological. For example, the object may include patients, artificial objects, or the like. In some embodiments, the object may include specific portions of human body, such as head, chest, abdomen, or any combination thereof. In some embodiments, the object may include specific organs, such as heart, esophagus, trachea, bronchus, stomach, gallbladder, small intestine, colon, bladder, ureter, uterus, fallopian tube, or any combination thereof. In some embodiments, the object may include a region of interest (ROI), such as tumors, nodules, or the like.

In some embodiments, the imaging device 110 may be radiation imaging device. The radiation imaging device refers to a medical imaging device using radiation to acquire an image. The radiation may include X-rays, γ rays, α rays, etc. The imaging device 110 may include a single modality imaging device and/or a multi-modality imaging device. The single modality imaging device may include, for example, an X-ray imaging device, a computed tomography (CT) device (e.g., X-CT, γ-CT), etc. The X-ray imaging device may include a digital subtraction angiography (DSA) device, a digital radiography (DR) device, a computed radiography (CR) device, a digital fluorography (DF) device, a breast X-ray machine, a C-arm scanning device, or the like. The multi-modality imaging device may include, for example, a computed tomography-magnetic resonance imaging (MRI-CT) device, a positron emission tomography- computed tomography (PET-CT) imaging device, a single photon emission computed tomography- computed tomography (SPECT-CT) imaging device, a digital subtraction angiography-magnetic resonance imaging (DSA-MRI) device, etc.

The processing device 120 may be configured to process data and/or information obtained from the imaging device 110, the terminal device 130, and/or the storage device 140. For example, the processing device 120 may perform data restoration, low-pass filtering, image reconstruction, and other processing on the image to be processed including the metal portion scanned by the imaging device 110 to obtain a target image. In some embodiments, the processing device 120 may be a single server or a group of servers. The group of servers may be centralized or distributed. In some embodiments, the processing device 120 may be local or remote. For example, the processing device 120 may access information and/or data from the imaging device 110, the terminal device 130, and/or the storage device 140 through the network 150. As another example, the processing device 120 may be directly connected with the imaging device 110, the terminal device 130, and/or the storage device 140 to access information and/or data. In some embodiments, the processing device 120 may be implemented on a cloud platform. For example, the cloud platform may include private clouds, public clouds, hybrid clouds, community clouds, distributed clouds, inter-cloud clouds, multi-clouds, or any combination thereof.

The terminal device 130 may include a mobile device 131, a tablet 132, a laptop 133, or any combination thereof. In some embodiments, the terminal device 130 may interact with other components in the medical system 100 through the network 150. For example, the terminal device 130 may send one or more control instructions to the imaging device 110 through the network 150 to control the imaging device 110 to scan the object according to the control instructions. As another example, the terminal device 130 may also receive the target image generated by the processing device 120 through the network 150 and display the target image for analysis and confirmation by operators. In some embodiments, the mobile device 131 may include a smart home device, wearable devices, a mobile device, a virtual reality device, an augmented reality device, or any combination thereof.

In some embodiments, the terminal device 130 may be a portion of the processing device 120. In some embodiments, the terminal device 130 may be integrated with the processing device 120 as an operating platform for the imaging device 110. For example, users/operators (e.g., doctors or nurses) of the medical system 100 may control operation of the imaging device 110 through the operating platform, such as scanning the object. In some embodiments, the processing device 120 may be integrated into the imaging device 110.

The storage device 140 may store data (e.g., an image to be processed, a matching template, a target image, etc.), instructions, and/or any other information. In some embodiments, the storage device 140 may store data obtained from the imaging device 110, the processing device 120, and/or the terminal device 130. For example, the storage device 140 may store the image to be processed of the object obtained from the imaging device 110. As another example, the storage device 140 may store the target image obtained from the processing device 120. In some embodiments, the storage device 140 may store data and/or instructions that the processing device 120 can execute or use to execute the exemplary processes described in the present disclosure.

In some embodiments, the storage device 140 may include a large capacity memory, a removable memory, a volatile read write memory, a read-only memory (ROM), or any combination thereof. In some embodiments, the storage device 140 may be implemented through the cloud platform described in the present disclosure.

In some embodiments, the storage device 140 may be connected with the network 150 to achieve communication with one or more components (e.g., the processing device 120, the terminal device 130) in the medical system 100. The one or more components in the medical system 100 may read data or instructions from the storage device 140 through the network 150. In some embodiments, the storage device 140 may be parts of the processing device 120 or connected with the processing device 120 independent, directly or indirectly.

The network 150 may include any suitable network that can facilitate exchange of information and/or data in the medical system 100. In some embodiments, the one or more components of the medical system 100 (e.g., the imaging device 110, the processing device 120, the terminal device 130, the storage device 140) may exchange information and/or data with the one or more components of the medical system 100 through the network 150. For example, the processing device 120 may obtain an image to be processed of the object from the imaging device 110 through the network 150. In some embodiments, the network 150 may include public networks (e.g., Internet), private networks (e.g., local area networks (LANs), wide area networks (WANs), etc.), wired networks (e.g., Ethernet), wireless networks (e.g., 802.11 networks, wireless Wi Fi networks, etc.), cellular networks (e.g., long term evolution (LTE) networks), frame relay networks, virtual private networks (VPNs), satellite networks, telephone networks, routers, hubs, server computers, or any combination thereof. In some embodiments, the network 150 may include one or more network access points. In some embodiments, the network 150 may include wired and/or wireless network access points, such as base stations and/or internet switching points. Through the access points, the one or more components of medical system 100 may be connected with the network 150 to exchange the data and/or information.

In some embodiments, the medical system 100 may include an imaging system. In some embodiments, the medical system 100 may include a treatment system. The treatment system may include a treatment plan system (TPS), image-guide radiotherapy (IGRT), etc. The image-guide radiotherapy (IGRT) may include a treatment device and an imaging device (e.g., the imaging device 110). The treatment device may include a linear accelerator, a cyclotron, a synchrotron, etc., configured to perform a radio therapy on a subject. The treatment device may include an accelerator of species of particles including, for example, photons, electrons, protons, or heavy ions.

It should be noted that the above description is provided for illustrative purposes only and is not intended to limit the scope of the present disclosure. For ordinary technical personnel in this field, various changes and modifications can be made under the guidance of the content of the present disclosure. The features, structures, methods, and other features of the exemplary embodiments described in the present disclosure can be combined in various ways to obtain additional and/or alternative exemplary embodiments. For example, the medical system 100 may also include a display device for outputting and displaying the target image generated by the processing device 120. Such deformations are within the protection scope of the present disclosure.

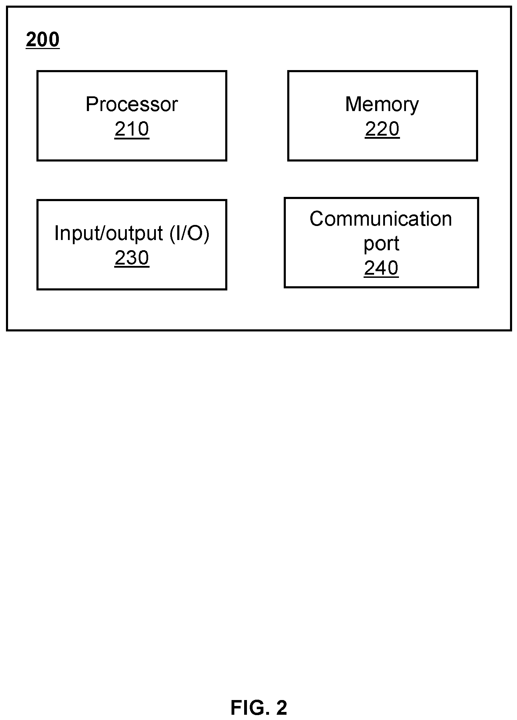

FIG. 2 is a schematic diagram illustrating exemplary hardware and/or software components of an exemplary computing device according to some embodiments of the present disclosure.

As shown in FIG. 2, in some embodiments, the computing device 200 may include a processor 210, a memory 220, an input/output (I/O) 230, and a communication port 240.

The processor 210 may execute computer instructions (e.g., program code) and perform functions of the processing device 120 according to the method(s) described herein. The computer instructions may include, for example, routines, programs, objects, components, data structures, procedures, modules, and functions, which perform particular functions described herein. For example, the processor 210 may process data of the imaging device 110, the terminal device 130, the storage device 140, and/or any other component in the medical system 100. In some embodiments, the processor 210 may include at least one hardware processor, such as a microcontroller, microprocessor, reduced instruction set computer (RISC), application specific integrated circuit (ASIC), application specific instruction set processor (ASIP), central processing unit (CPU), graphics processing unit (GPU), physical processing unit (PPU), microcontroller unit, digital signal processor (DSP), field programmable gate array (FPGA), high-order RISC Machine (ARM), programmable logic device (PLD), any circuit or processor or similar capable of performing at least one function, or any combination thereof.

Merely for illustration, only one processor is described in the computing device 200. However, it should be noted that the computing device 200 in the present disclosure may also include multiple processors, thus operations and/or method steps that are performed by one processor as described in the present disclosure may also be jointly or separately performed by the multiple processors. For example, if the processor of the computing device 200 executes both operations A and B, it should be understood that operation A and operation B may also be performed by two or more different processors jointly or separately in the computing device 200 (e.g., a first processor executes operation A and a second processor executes operation B, or the first and second processors jointly execute operations A and B).

The memory 220 may store data/information obtained from the medical device 110, the terminal device 130, the storage device 140, and/or any other component in the medical system 100. In some embodiments, the memory 220 may include a mass storage, a removable storage, a volatile read-write memory, a read-only memory (ROM), or any combination thereof. For example, the mass storage may include a magnetic disk, an optical disk, a solid-state hard disk, or the like. The removable memory may include a flash drive, a floppy disk, an optical disk, a memory card, a compressed disk, a magnetic tape, etc. The volatile read and write memory may include a random-access memory (RAM). The RAM may include a dynamic RAM (DRAM), a double rate synchronous dynamic RAM (DDRSDRAM), a static RAM (SRAM), a thyristor RAM (t-ram), a zero capacitance (Z-RAM), etc. The exemplary read-only memory may include a masked read-only memory (MROM), a programmable read-only memory (PROM), an erasable programmable read-only memory (EPROM), an electrically erasable programmable read-only memory (EEPROM), an optical disk read-only memory (CD-ROM), a digital multifunctional disk read-only memory, or the like. In some embodiments, the memory 220 may store at least one program and/or instruction for executing the exemplary manner described in the present disclosure.

The input/output (I/O) 230 may be used to input and/or output signal data, information, etc. In some embodiments, the input/output (I/O) 230 may enable the user to interact with processing device 120. In some embodiments, the input/output (I/O) 230 may include an input device and an output device. An exemplary input device may include a keyboard, a mouse, a touch screen, a microphone, or any combination thereof. The exemplary output device may include a display device, a speaker, a printer, a projector, or any combination thereof. An exemplary display device may include a liquid crystal display (LCD), a light emitting diode (LED)-based display, a flat panel display, a curved surface display, a television device, a cathode ray tube, or any combination thereof.

The communication port 240 may be connected with a network (e.g., the network 150) to facilitate data communication. The communication port 240 may establish a connection between the processing device 120 and the imaging device 110, the terminal device 130, and/or the storage device 140. The connection may include a wired connection and a wireless connection. The wired connection may include, for example, cable, optical cable, telephone line, or any combination thereof. The wireless connection may include, for example, Bluetooth link, Wi-FiTM link, WiMaxTM link, WLAN link, ZigBee link, mobile network link (e.g., 3G, 4G, 5g, etc.), or any combination thereof. In some embodiments, the communication port 240 may be and/or include a standardized communication port, such as RS232, RS485, etc. In some embodiments, the communication port 240 may be a specially designed communication port. For example, the communication port 240 may be designed according to a digital imaging and medical communication (DICOM) protocol.

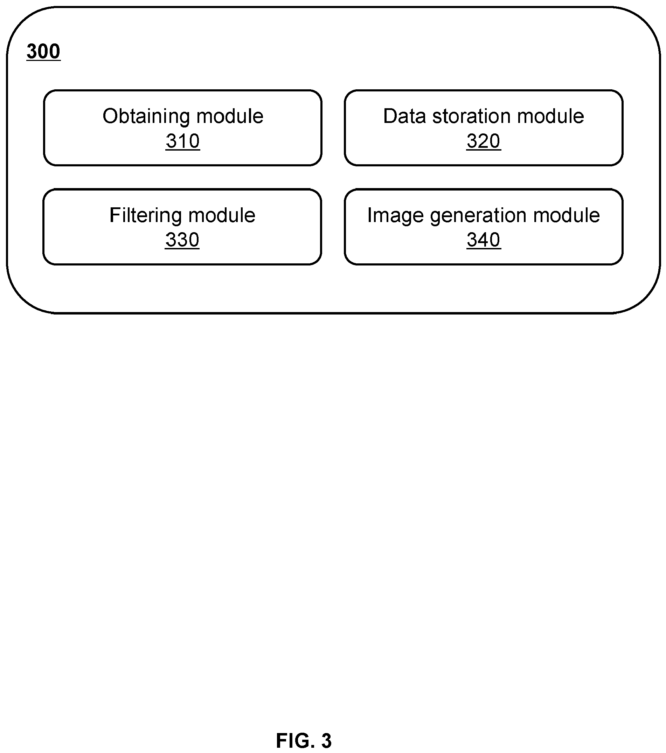

FIG. 3 is a schematic diagram illustrating exemplary modules of a system for metal artifacts correction according to some embodiments of the present disclosure.

As shown in FIG. 3, in some embodiments, a metal artifacts correction system 300 may include an obtaining module 310, a data restoration module 320, a filtering module 330, and an image generation module 340. In some embodiments, one or more modules in the metal artifacts correction system 300 may be connected with each other. In some embodiments, at least a portion of the metal artifacts correction system 300 may be implemented on the imaging device 110, the processing device 120, or the terminal device 130 as shown in FIG. 1.

The obtaining module 310 may be configured to obtain an image to be processed including a metal portion. In some embodiments, the image to be processed may include X-ray images or CT images.

The data restoration module 320 may be configured to perform data restoration. In some embodiments, the data restoration module 320 may be configured to initial projection data by performing data restoration on a metal portion of the image to be processed.

In some embodiments, the data restoration module 320 may be configured to determine a metal image based on the image to be processed; determine a metal trajectory based on the metal image, the metal trajectory including a metal trajectory sinogram; obtain the initial projection data by performing the data restoration based on the metal trajectory. The metal trajectory sinogram reflects a position of the metal portion in the image to be processed.

The filtering module 330 may be configured to determine target projection data by filtering the initial projection data. In some embodiments, the filtering module 330 may be configured to obtain the target projection data by performing low-pass filtering on the initial projection data. In some embodiments, the filtering module 330 may be configured to obtain restoration data corresponding to the metal portion in the initial projection data; and obtain the target projection data by performing the low-pass filtering on the restoration data corresponding to the metal portion.

In some embodiments, the filtering module 330 may be configured to obtain a target filter based on at least one of the initial projection data, object information of the object corresponding to the image to be processed, a data restoration process corresponding to the initial projection data. In some embodiments, the filtering module 330 may be configured to determine the target projection data by filtering the initial projection data using the target filter.

In some embodiments, the filtering module 330 may be configured to determine a target frequency band based on at least one of object information of an object corresponding to the image to be processed, the data restoration process corresponding to the initial projection data, or the initial projection data. In some embodiments, the filtering module 330 may be configured to obtain the target projection data by filtering out data higher than the target frequency band from the initial projection data.

The image generation module 340 may be configured to generate a target image based on the target projection data. In some embodiments, the image generation module 340 may be configured to obtain a target image that filters out high frequency metal artifacts by back-projection reconstruction based on the target projection data.

It should be noted that the above description of the metal artifacts correction system 300 is for illustrative purposes only and is not intended to limit the scope of the present disclosure. For ordinary technical personnel in this field, various variants and modifications can be made according to the present disclosure. However, these changes and modifications are not outside the scope of this manual. For example, one or more modules of the metal artifacts correction system 300 mentioned above may be omitted or integrated into a single module. As another example, the metal artifact correction system 300 may include one or more additional modules, such as a storage module for data storage. As a further example, the metal artifacts correction system 300 may include a training module for training to obtain a first module, a second module, a third module, a filtering module, or a data restoration module.

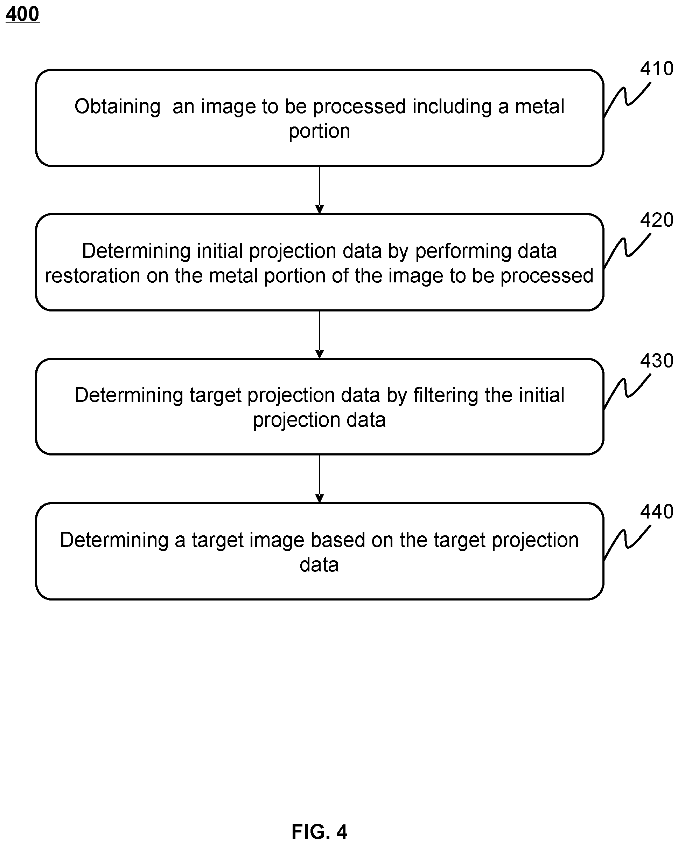

FIG. 4 is a flowchart illustrating an exemplary process for metal artifacts correction according to some embodiments of the present disclosure.

In some embodiments, a process 400 may be executed by the medical system 100 (e.g., the imaging device 110, the processing device 120, or the terminal device 130 in the medical system 100), the computing device 200, or the metal artifacts correction system 300. For example, the process 400 may be implemented as instructions and stored in a memory. The memory may be an external memory of the storage device 140 or the medical system 100, and may be accessed by the processing device 120 or the medical system 100. The processing device 120 or the metal artifacts correction system 300 may execute instructions, and when executing the instructions, the process 400 may be performed. The diagram of operations of the process 400 presented below is illustrative. In some embodiments, the process may be accomplished by utilizing one or more undescribed additional operations and/or one or more undescribed operations. In addition, an operation sequence of process 400 shown in FIG. 4 and described below is non-restrictive.

In 410, an image to be processed including a metal portion may be obtained. In some embodiments, the operation 410 may be executed by the processing device 120 or the obtaining module 310.

The image to be processed refers to an initial scanning image that has not been processed and includes data of the metal portion, such as an image obtained by scanning an object through the imaging device 110.

When the imaging device scans an object, rays from a ray source may be delivered to the object through a ray filter, and the rays passing through the object may be detected as electrical signals by a detector. An output signal of the detector may be collected, amplified, and converted into a digital signal for each detector channel to generate projection data.

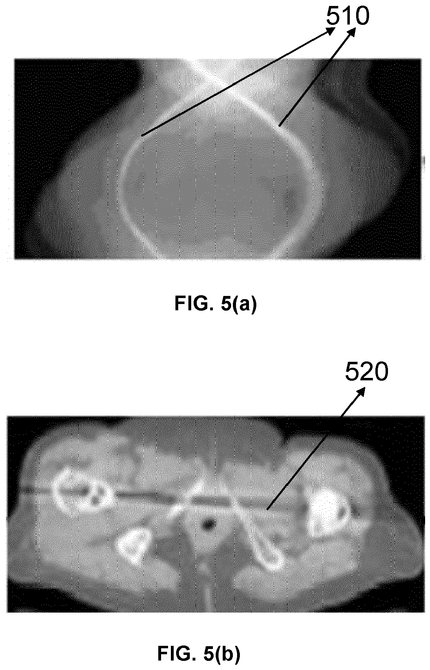

When the rays (e.g., X-rays, α-rays, β-rays) are imaging, due to a high attenuation of the rays by metal, a proportion of the rays absorbed by metals may be relatively large, and the detector may receive few rays. In clinical applications, when performing X-ray imaging on the object, a patient may carry metal implants (e.g., metal dentures, bone nails, etc.) inside the human body, corresponding data at the metal site may be not collected or only a part of data may be collected or the intensity of the collected data of the metal is relatively weak, due to an absorption of most of the rays by the metal implants, resulting in insufficient data collection for the obtained projection data, thus forming metal artifacts in the reconstructed image. In some embodiments, the metal portion may be in shown as metal artifact in the image to the processed, that is, the image to be processed may include metal artifact caused by metal (e.g., the metal implant). FIG. 5(a) is a schematic diagram illustrating an exemplary projection data image including a metal portion according to some embodiments of the present disclosure, FIG. 5(b) is a schematic diagram illustrating an exemplary reconstructed image including a metal portion according to some embodiments of the present disclosure. The read projection value may differ significantly from the true value, resulting in a formation of metal artifacts in the image. As shown in operation 510 of FIG. 5(a), the metal portion may typically appear as a blank band without actual information on the sinogram (i.e., a projection data image), i.e., missing data. As shown in operation 520 of FIG. 5(b), the metal portion may generally appear as a severe stripe in the reconstructed image.

In some embodiments, the image to be processed may include X-ray imaging images including the metal portion. In some embodiments, the image to be processed may include X-ray images and/or CT images including the metal portion.

In some embodiments, the image to be processed may include a projected data image (e.g., an image shown in FIG. 5(a)) and/or a reconstructed image (e.g., an image shown in FIG. 5(b).

In some embodiments, the processing device may obtain the image to be processed including the metal portion from the imaging device 110 and/or the storage device 140. For example, the processing device 120 may obtain the corresponding image to be processed from the storage device 140 based on personal information of the object. As another example, the processing device 120 may obtain the image to be processed from the imaging device 110 directly.

In 420, initial projection data may be determined by performing data restoration on the metal portion of the image to be processed. In some embodiments, the operation 420 may be executed by the processing device 120 or the data restoration module 320.

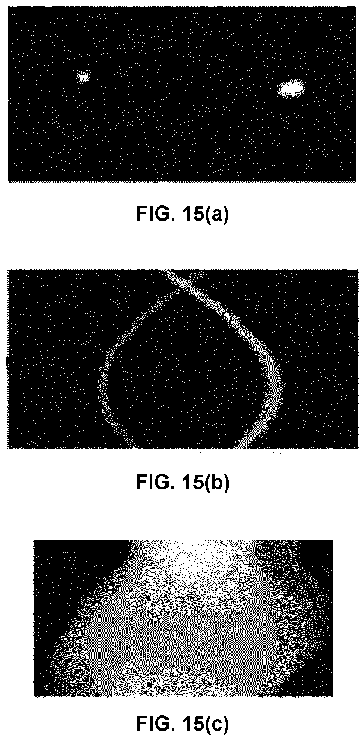

The metal portion refers to data corresponding to a metal implant, which may be shown as metal artifacts in the reconstructed image (i.e., the image to be processed) and may be shown as trajectory (also referred to as metal trajectory) (e.g., as shown in FIG. 15(b)) in projection data (e.g., projection data determined based on a metal image as shown in process 1400). The data restoration refers to a process of restoring data corresponding to the metal portion. For example, the data restoration may include restoring uncollected data of the metal, and/or restoring a projection value of the collected data of the metal (e.g., estimate a true projection value of the collected data of the metal), or the like.

The initial projection data refers to the projection data obtained through the data restoration. In some embodiments, the initial projection data may include restored projection data corresponding to a metal portion and collected projection data of other portions, e.g., the initial projection data may include complete projection data. In some embodiments, the initial projection data may include the restored projection data corresponding to the metal portion. By directly obtaining the restored projection data corresponding to the metal portion, operation of segmenting initial projection data can be avoided, which can avoid introduction of errors in the segmentation process. Therefore, the process can directly filter and process the restored projection data corresponding to the metal portion, which can improve processing efficiency and accuracy.

In some embodiments, the processing device may obtain the initial projection data by performing the data restoration on the metal portion of the image to be processed. For example, the data restoration process may include an interpolation process. The interpolation process may achieve the data restoration by interpolating a region where the metal portion is located. For example, the processing device 120 may fit data corresponding to the metal portion based on the collected data at an edge of the metal portion in the sinogram, thereby achieving data recovery and obtaining the projection data corresponding to the metal portion. As another example, the processing device 120 may fit the data corresponding to the metal portion based on the collected data at an edge of the metal trajectory in the sinogram, and obtain complete projection data including the projection data corresponding to the metal portion and the collected projection data of other portions.

In some embodiments, the processing device may determine the initial projection data by using a trained data restoration model. For example, the processing device 120 may input an image to be processed including the metal portion into the data restoration model, the data restoration model may output corresponding initial projection data by analyzing and processing the image to be processed. In some embodiments, an output of the data restoration model may be complete projection data of the object, and the output of the data restoration model may include the restored projection data corresponding to the metal portion and the collected projection data of other portions. In some embodiments, the output of the data restoration model may be the restored projection data corresponding to the metal portion.

In some embodiments, the data restoration model may include a machine learning model. For example, the machine learning model can include a convolutional neural network (CNN), a fully connected neural network, a recurrent neural network (RNN), or the like.

In some embodiments, the data restoration model may be obtained by training an initial machine learning model based on first sample data. In some embodiments, the first sample data may include multiple sets of samples composed of sample metal portion images and sample restoration projection data. In some embodiments, the processing device may train the initial machine learning model to obtain a trained data restoration model by using sample metal portion images as training inputs of the model and corresponding sample restoration projection data as training outputs of the model. In some embodiments, during a training process of the data restoration model, the accuracy of the model can be improved by establishing a loss function, or the like. In some embodiments, the processing device may train the data restoration model by training in any reasonable and feasible way, which may not be limited herein.

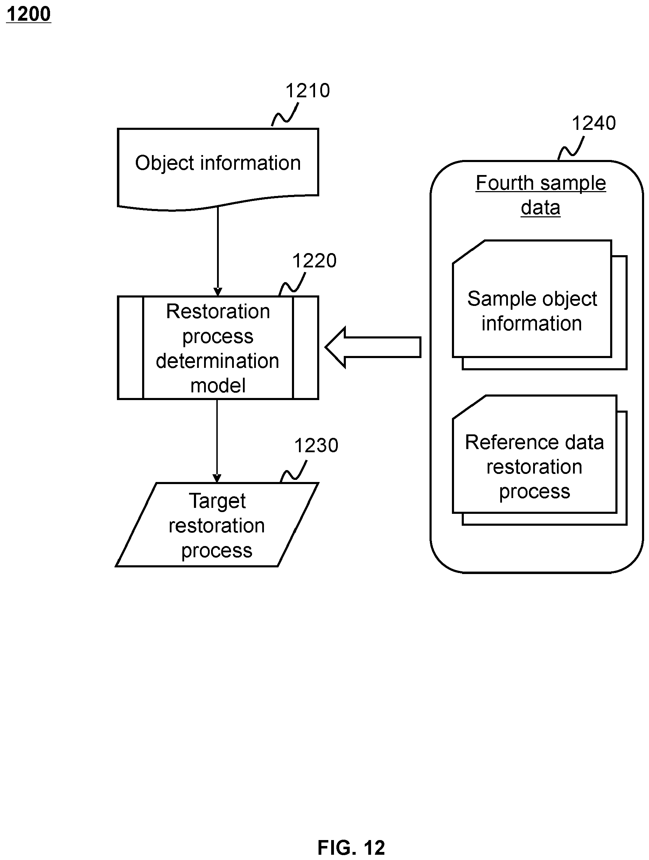

In some embodiments, the processing device may obtain object information of the object corresponding to the image to be processed and determine a target restoration process based on the object information. Further, the processing device may obtain the initial projection data by performing data restoration on the metal portion of the image to be processed based on the target restoration process. More descriptions of determining the target restoration process may be found in FIG. 12 and related descriptions.

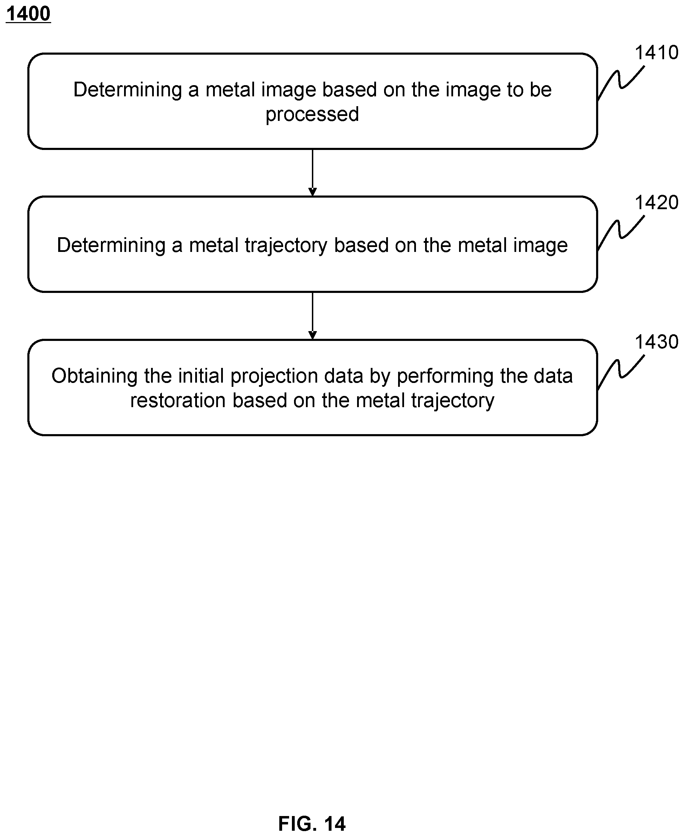

In some embodiments, the processing device may determine a metal image based on the image to be processed and determine a metal trajectory based on the metal image. Further, the processing device may obtain the initial projection data by performing the data restoration on the metal trajectory by using the data restoration process (e.g., the target restoration process). The metal trajectory may include a metal trajectory sinogram. More descriptions may be found in FIG. 14 and related descriptions.

In 430, target projection data may be determined by filtering the initial projection data. In some embodiments, the operation 430 may be executed by the processing device 120 or the filtering module 330.

The data restoration refers to a process of inferring restored data based on reference data, and the restored data may depend on the reference data. In some embodiments, the reference data may include collected data and/or restored data. However, since the reference data includes data from different frequency bands, it is inevitable to introduce some high frequency data during the data restoration process. Correspondingly, when performing the data restoration on the metal portion of the image to be processed, some high frequency data may be introduced into the restored data (e.g., the initial projection data).

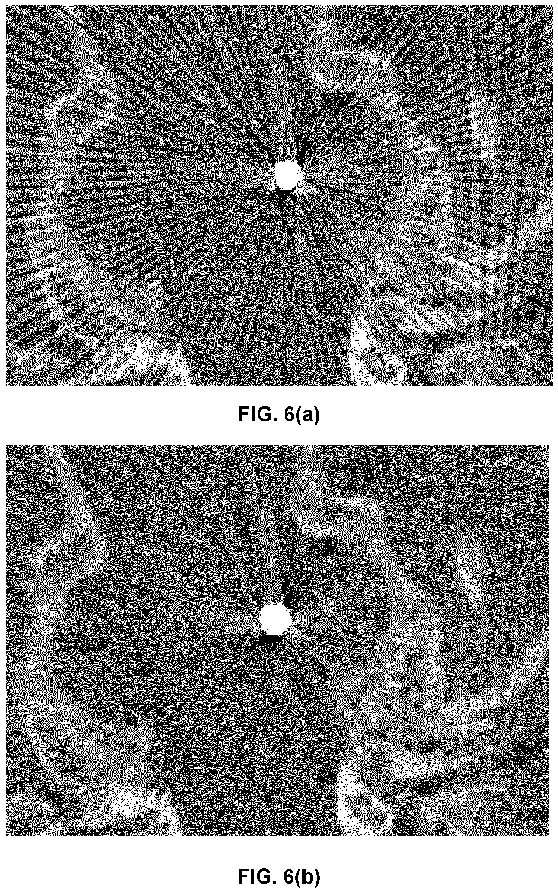

Different tissues or organs may exhibit different pixel or frequency values in the projection data. The high frequency data refers to data where the pixel or frequency value is greater than a standard value of a corresponding portion (e.g., a portion that wears metal devices). As shown in FIG. 6(a), high frequency data may appear as varying striped artifacts in the reconstructed image.

In some embodiments, the processing device may obtain the target projection data that filters out high frequency data by filtering the initial projection data.

In some embodiments, the processing device may obtain the target projection data by performing low-pass filtering on the initial projection data. By performing the low-pass filtering on the initial projection data, the metal artifacts can be eliminated while filtering out the high frequency data introduced during the data restoration process, thereby avoiding high frequency artifacts when obtaining the reconstructed image based on the restored projection data, and improving the image quality of the reconstructed image.

In some embodiments, when the initial projection data only includes projection data corresponding to the metal portion, the processing device may obtain the target projection data by performing the low-pass filtering on the initial projection data directly.

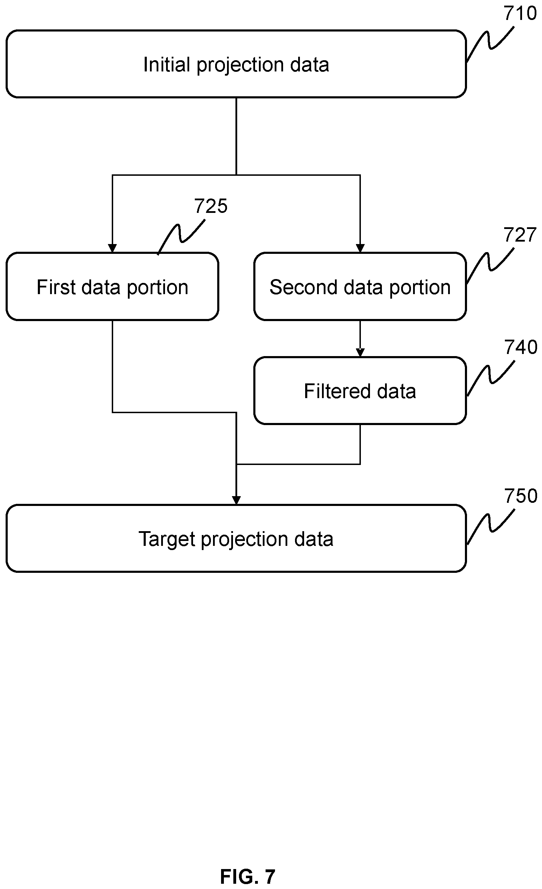

In some embodiments, when the initial projection data includes complete projection data, the processing device may obtain restoration data corresponding to the metal portion in the initial projection data. Further, the processing device may obtain the target projection data by performing the low-pass filtering on the restoration data corresponding to the metal portion. In some embodiments, the processing device may obtain the target projection data by performing the low-pass filtering on the restoration data corresponding to the metal portion while retaining the original projection data of other portion. FIG. 7 is a schematic diagram illustrating an exemplary process of filtering projection data according to some embodiments of the present disclosure, the following may be described in detail combined with FIG. 7.

As shown in FIG. 7, in some embodiments, when the initial projection data includes the complete projection data, the processing device may divide the initial projection data 710 into a first data portion 725 and a second data portion 727. The first data portion 725 may be raw data, i.e., the collected projection data at other portion other than the collected projection data at the metal. The second data portion 727 may be restoration data obtained through the data restoration, i.e., the restoration data corresponding to the metal portion. In some embodiments, the processing device may determine the second data portion 727 in the initial projection data 710 by using a template. The template may be determined based on the collected projection data at other portion. For example, the collected projection data at other portion may be determined as a template. As another example, based on the collected projection data at other portion, the metal trajectory sinogram may be determined through threshold segmentation and other processes, and the metal trajectory sinogram may be determined as a template.

In some embodiments, the processing device may obtain filtered data 740 by performing the low-pass filtering on the second data portion 727. For example, the processing device 120 may obtain the filtered data 740 by performing the low-pass filtering on the second data portion 727 by using Gaussian low-pass filtering. As another example, the processing device 120 may obtain the filtered data 740 by performing the low-pass filtering on the second data portion 727 by using a trained filtering model.

In some embodiments, the processing device may obtain the target projection data 750 based on the filtered data 740 and the first data portion 725 of the initial projection data 710. In some embodiments, the processing device may retain original data corresponding to the first data portion 725 (the collected projection data at other portion), and obtain filtered restored projection data 450 based on the filtered data 740 and the original data corresponding to the first data portion 725. In some embodiments, the processing device may obtain the target projection data 750 by fusing the filtered data 740 with the original data corresponding to the first data portion 725 (e.g., through an overlay fusion process).

By performing the low-pass filtering on the restoration data corresponding to the metal portion in the initial projection data obtained from the data restoration, the remaining data may be not filtered, which can avoid affecting the image quality corresponding to the remaining data.

In some embodiments, the processing device may obtain a target filter and determine the target projection data by filtering the initial projection data using the target filter. In some embodiments, the processing device may determine the target filter based on at least one of the initial projection data, object information of the object corresponding to the image to be processed, and data restoration process corresponding to the initial projection data. The object information may include at least one of personal information, a scanning position, a scanning parameter, and historical scanning data. For example, the personal information may include information such as age, gender, occupation, height, weight, fat ratio, water fat ratio, and historical cases of the object. The historical scanning data may include information such as a historical scanning position, a historical scanning parameter, historical reconstructed images, historical projection data of the object, or the like.

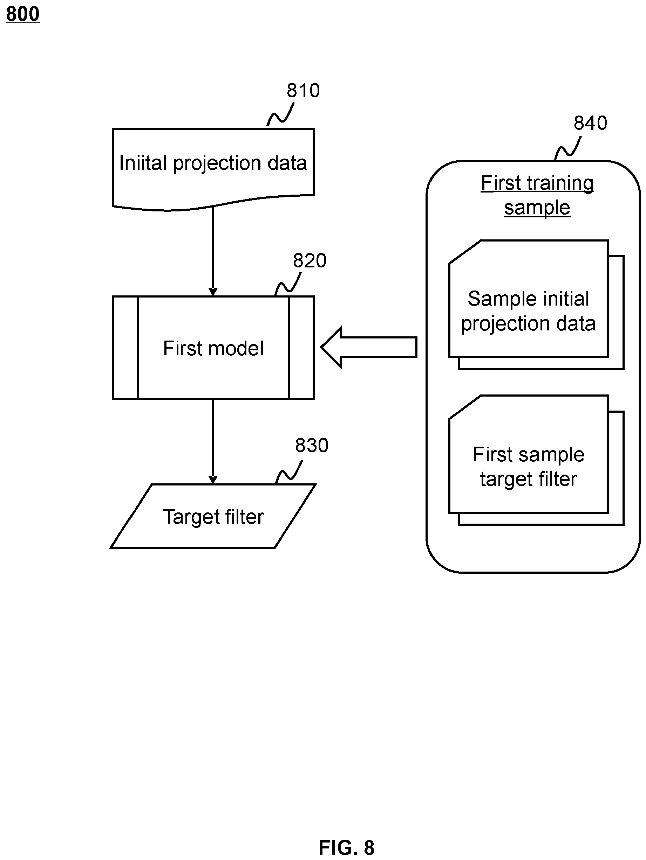

In some embodiments, the processing device may determine the target filter using the trained model based on the initial projection data, the object information, or the data restoration process. For example, the processing device 120 may use the trained first model to determine the target filter based on the initial projection data. For example, the processing device 120 may determine the target filter based on the initial projection data by using the trained first model. As another example, the processing device 120 may determine the target filter based on the object information by using the trained second model. As a further example, the processing device 120 may determine the target filter based on the data restoration process corresponding to the initial projection data by using a trained third model. In some embodiments, the first model, the second model, and the third model may be trained simultaneously or separately. More descriptions may be found in FIG. 8-FIG. 10 and related descriptions.

In some embodiments, the processing device may determine the target filter based on at least two of the initial projection data, the object information, and the data restoration process by using a filter determination model. For example, the processing device 120 may input the initial projection data and object information into the first model and the second model respectively, and the first model and the second model may output a corresponding target filter by analyzing and processing the initial projection data and object information respectively. In some embodiments, the processing device may select any one of the target filters output from the first model and the second model as a final target filter. In some embodiments, the processing device may select a target filter corresponding to information with a relatively high confidence level based on a confidence level of the initial projection data and the object information. In some embodiments, the processing device may determine a final target filter based on a using frequency and a reliability of the target filter output from the first model and the second model. The using frequency of a target filter may reflect a count of times the target filter is used for low-pass filtering in clinical applications. For example, the count of times each filter is used for the low-pass filtering over a period of time may be counted to determine a using frequency of the target filter. The reliability of a target filter may reflect a quality of a result obtained when the target filter is used for the low-pass filtering. For example, a quality of a corresponding reconstructed image obtained by performing the low-pass filtering using each filter may be scored. The higher the score of the reconstructed image, the higher the reliability of the corresponding filter.

As another example, the processing device 120 may input the initial projection data and the data restoration process (e.g., a process, types of values, a quantity of reference data, and a location and/or type for performing the data restoration on the metal portion on the metal portion) into a filter determination model, and the filter determination model may output a target filter by analyzing and processing the initial projection data and the data restoration process. As a further example, the processing device 120 may input the initial projection data, the object information, and the data restoration process (e.g., a process, types of values, a quantity of reference data, and a location and/or type for performing the data restoration on the metal portion on the metal portion) into the filter determination model, the filter determination module may output a target filter by analyzing and processing the initial projection data, the object information, and the data restoration process.

In some embodiments, the filter determination model may be obtained by training the initial machine learning model using second sample data. The second sample data may include multiple sets of sample data corresponding to multiple different objects, each set of sample data may be composed of at least two of sample initial projection data, sample object information, and sample data restoration process, and a corresponding sample target filter. For example, the processing device 120 may obtain a trained filter determination model by training the initial machine learning model using the initial projection data, the sample object information, and the sample data restoration process of the object as training inputs and the sample target filter as a training output.

In some embodiments, the processing device may determine the sample target filter by evaluating the sample target projection data obtained by different filters. For example, the processing device 120 may score a smoothness and/or granularity of the sample target projection data (or an reconstructed image corresponding to the sample target projection data) obtained by each filter, and determine a filter corresponding to sample target projection data (or an reconstructed image corresponding to the sample target projection data) with a highest comprehensive score as a sample target filter. The smoothness reflects a degree of brightness change in different regions of the image (e.g., sample target projection data image or a reconstructed image corresponding to the sample target projection data). The smoother the brightness change, the higher the image quality. The granularity reflects a thickness of a density region (i.e., particles) of the image (e.g., sample target projection data image or a reconstructed image corresponding to the sample target projection data). The finer the granularity, the higher the clarity of the image. As another example, the processing device 120 may score quality of the reconstructed image corresponding to the sample target projection data obtained by each filter, and determine a filter corresponding to a reconstructed image with a highest score as a sample target filter. In some embodiments, a score of the sample target projection data obtained by each filter may also be determined by the user.

In some embodiments, the processing device may obtain the target projection data by filtering out data higher than a target frequency band from the initial projection data. In some embodiments, the processing device may determine the target frequency based on an average value, a maximum value, and other projection data corresponding to the metal portion obtained from multiple sets of clinical scanning data. In some embodiments, the target frequency may be flexibly set by the user based on actual needs.

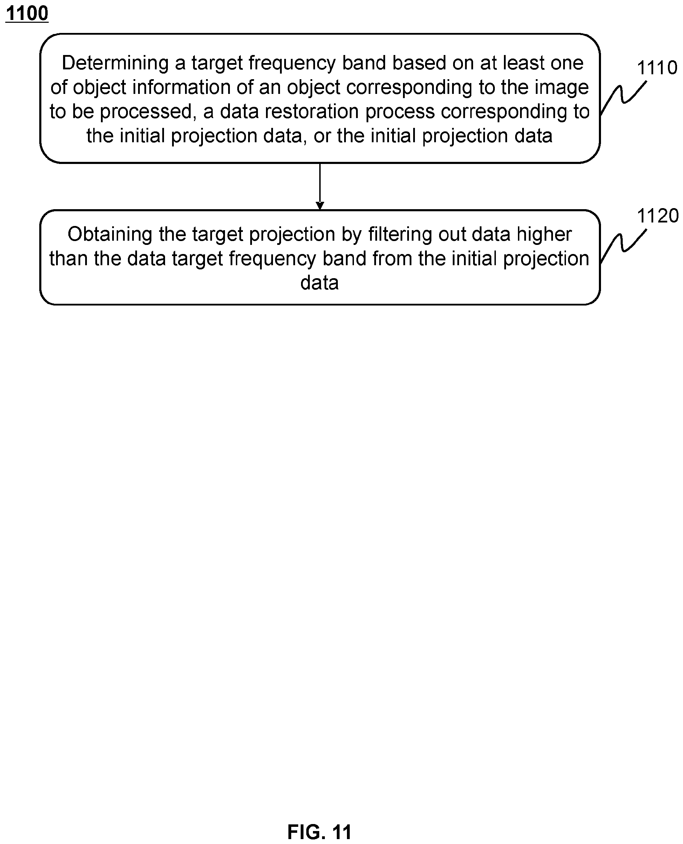

In some embodiments, the processing device may determine a target frequency band based on at least one of the object information corresponding to the image to be processed, the data restoration process corresponding to the initial projection data, and the initial projection data. More descriptions may be found in FIG. 11 and related descriptions.

In some embodiments, the processing device may obtain the target projection data by filtering out data higher than the target frequency band from the initial projection data using the target filter.

In 440, a target image may be determined based on the target projection data. In some embodiments, the operation 440 may be executed by the processing device 120 or the image generation module 340.

In some embodiments, the processing device may obtain a target image that filters out high frequency artifacts and/or metal artifacts through back-projection reconstruction based on the target projection data. In some embodiments, the processing device may reconstruct the target projection data through a back-projection reconstruction algorithm to obtain an intermediate reconstructed image. Further, the processing device may obtain the target image based on the intermediate reconstructed image and a segmented metal image. In some embodiments, the processing device may obtain the target image by fusing the intermediate reconstructed image with the metal image. For example, the processing device 120 may obtain the target image by superimposing the metal image onto the intermediate reconstructed image.

In some embodiments, the back-projection reconstruction algorithm may include but are not limited to parallel ray beam filtered back-projection reconstruction and/or fan-shaped ray beam back-projection reconstruction. In some embodiments, the target image may be obtained through other image reconstruction processes, such as analytical reconstruction, planar reconstruction, maximum density projection, volume roaming technology VRT, or the like, which may not be limited herein.

By performing the low-pass filtering on the initial projection data obtained from the data restoration during a process of eliminating the metal artifacts, the high frequency artifacts and metal artifacts in the reconstructed image can be weakened or eliminated, which can improve the image quality of the reconstructed image, and thereby improving accuracy of diagnostic results of a diagnosed region. FIG. 6 is a schematic diagram illustrating exemplary images before and after correction according to some embodiments of the present disclosure, an image shown in FIG. 6(a) may be a reconstructed image without filtering (i.e., a reconstructed image obtained directly from the restored projection data), while an image shown in FIG. 6(b) may be the target image (i.e., the filtered reconstructed image). As shown in FIG. 6(a), the reconstructed image obtained directly from the restored projection data may include some small fine grained artifacts, i.e., the high frequency artifacts. The small fine grained artifacts in the target image shown in FIG. 6(b) may be weakened.

It should be noted that the above description of the process 400 is only for example and explanation, and does not limit the scope of application of this specification. For those skilled in this field, various modifications and changes can be made to the process 400 under the guidance of this manual. However, these modifications and changes are still within the scope of this manual.

FIG. 8 is a schematic diagram illustrating an exemplary process of determining a target filter according to some embodiments of the present disclosure.

In some embodiments, the process 800 may be executed by the medical system 100 (e.g., the processing device 120 in the medical system 100), the computing device 200, or the metal artifacts correction system 300. For example, the process 800 may be implemented as instructions and stored in a memory. The memory may be external to the storage device 140 or the medical system 100, and may be accessed by the processing device 120 or the medical system 100. The processing device 120 or the metal artifacts correction system 300 may execute the instructions, and when executing the instructions, the process 800 may be performed. The diagram of operations of the process 800 presented below is illustrative. In some embodiments, the process may be accomplished by utilizing one or more undescribed additional operations and/or one or more undescribed operations. In addition, the operation sequence of the process 800 shown in FIG. 8 and described below is non-restrictive.

In 810, the processing device may obtain initial projection data corresponding to the image to be processed. As described above, the processing device may determine the initial projection data by performing the data restoration on the metal portion of the image to be processed. More descriptions may be found in FIG. 4 and related descriptions, which may not be repeated herein.

In 820, the processing device may determine the target filter based on the initial projection data using a trained first model.

In some embodiments, the first model may include a machine learning model, such as CNN, full connected neural network, RNN, or the like.

In 830, the first model may output a corresponding target filter by analyzing and processing the initial projection data. For example, the first model may determine a corresponding target filter and output the corresponding target filter by analyzing the scanning position in the initial projection data, data values of all data (e.g., pixel values or frequency values) and other information.

In some embodiments, the first model may be obtained by training based on first training samples. For example, as shown in the operation 840, the first model may be obtained by training the initial machine learning model based on the one or more first training samples.

In some embodiments, each first training sample may include sample initial projection data and a corresponding first sample target filter. In some embodiments, the multiple first training samples may include one or more scanning positions and/or one or more lesion types. For example, the sample initial projection data corresponding to the scanning position and the corresponding first sample target filter may form a first training sample. The processing device 120 may obtain sample data from multiple different scanning positions such as head, neck, chest, stomach, arms, legs, feet, or the like. In some embodiments, the multiple first training samples may correspond to one or more sample objects.

In some embodiments, the first sample target filter corresponding to the initial projection data of the sample may be determined by evaluating the sample target projection data. In some embodiments, the first sample target filter corresponding to the sample initial projection data may be determined by evaluating the sample target projection data. For example, for the same set of initial projection data, the processing device 120 may score the smoothness and/or granularity of the sample target projection data obtained through different filters, and/or score the quality of the reconstructed image corresponding to the sample target projection data. Further, the processing device 120 may determine the first sample target filter based on the score. In some embodiments, the processing device may determine a highest score as a first sample target filter. As another example, for the same set of initial projection data, the user may score the quality of sample target projection data obtained by different filters or label the first sample target filter corresponding to the initial projection data based on the data quality directly.

In some embodiments, the processing device may train a first initial model to obtain the trained first model by using the sample initial projection data of the one or more first training samples as inputs of the model training and the first sample target filter as an output of the model training. In some embodiments, the processing device may obtain the first model trained by training in any reasonable and feasible way, which may not be limited herein.

In some embodiments, the processing device may determine the target projection data by filtering the initial projection data using the target filter output from the first model. More descriptions may be found in FIG. 4 and related descriptions, which may not be repeated herein.

It should be noted that the above description of the process 800 is only for example and explanation, and does not limit the scope of application of this specification. For those skilled in this field, various modifications and changes can be made to the process 800 under the guidance of this manual. However, these modifications and changes are still within the scope of this manual.

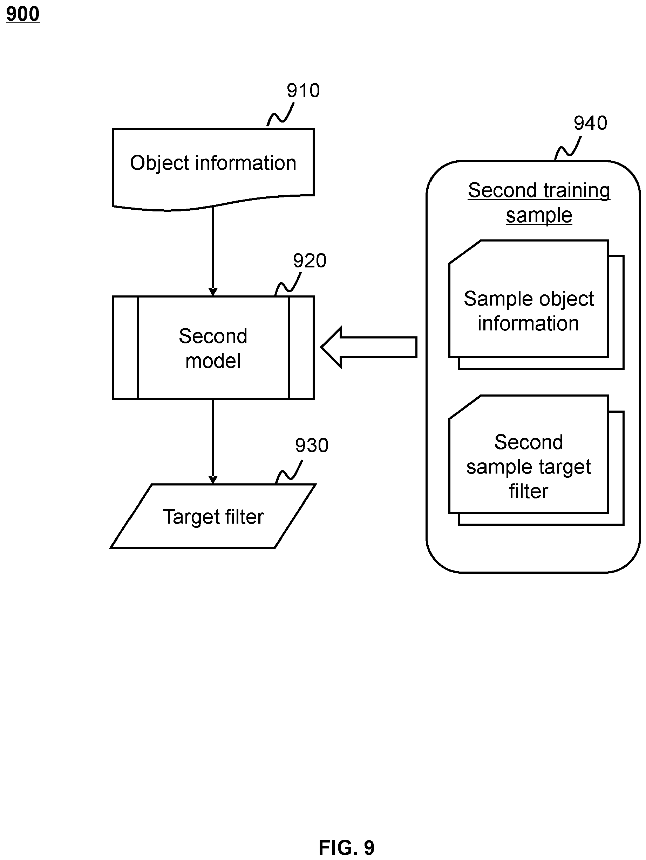

FIG. 9 is a schematic diagram illustrating an exemplary process of determining a target filter according to other embodiments of the present disclosure.

In some embodiments, the process 900 may be executed by the medical system 100 (e.g., the processing device 120 in the medical system 100), the computing device 200, or the metal artifacts correction system 300. For example, the process 900 may be implemented as instructions (e.g., applications) and stored in a memory, such as the external storage device 140 or the medical system 100 which may be accessed by the processing device 120 or the medical system 100. The processing device 120 or the metal artifacts correction system 300 may execute instructions, and when executing the instructions, the process 900 may be performed. The diagram of operations of the process 900 presented below is illustrative. In some embodiments, the process may be accomplished by utilizing one or more undescribed additional operations and/or one or more undescribed operations. In addition, the operation sequence of the process 900 shown in FIG. 9 and described below is non-restrictive.

In 910, the processing device may obtain object information of the object corresponding to the image to be processed. Combined the descriptions above, the object information may include at least one of personal information (e.g., gender, age, medical history, etc.), a scanning position of the object (e.g., patents), a scanning parameter (e.g., tube current, tube voltage, scanning time, the position of the tube, the position of the detector, the scanning angle, etc.), or historical scanning data.

In some embodiments, the processing device may obtain the object information from an imaging device (e.g., the imaging device 110) or a storage device (e.g., the storage device 140). In some embodiments, the processing device may obtain the object information from the terminal device. For example, the processing device 120 may obtain the object information input by the user from the terminal device 130. In some embodiments, the processing device can obtain the object information by scanning a two-dimensional code of the object. For example, the processing device 120 may obtain the object information by scanning the two-dimensional code of the object. For example, the processing device 120 may obtain the object information by scanning the two-dimensional code of human body and a bed of the object.

In 920, the processing device may input the object information into a trained second model. In some embodiments, the second model may include a machine learning model, such as CNN, full connected neural network, RNN, or the like.

In 930, the second model may output the corresponding target filter by analyzing and processing the object information. For example, the second model may determine the corresponding target filter and output the target filter by analyzing the scanning position, the age, the gender, the medical history, and other information in the object information.

In some embodiments, the second model may be obtained by training based on the second training samples. For example, as shown in the operation 940, the second model may be obtained by training the initial machine learning model based on the one or more second training samples.

In some embodiments, each second training sample may include sample object information and a corresponding second sample target filter. In some embodiments, the multiple second training samples may include one or more scanning objects and/or one or more lesion types. For example, sample object information corresponding to a lesion type and the second sample target filter may form a second training sample, and the processing device 120 may obtain sample data of brain tumors, thyroid, breast cancer, fractures, and other different focus types.

In some embodiments, the processing device may determine a second sample target filter corresponding to the sample object information through statistical analysis. For example, the processing device 120 may perform the statistical analysis on scanning values (e.g., CT values, scanning image pixel values, and projection data values) of various tissues or organs of different types of sample objects, obtain a standard value of projection data for each organization or organ, and determine a corresponding second sample target filter based on the standard values.

In some embodiments, the processing device may train the second initial model to obtain a trained second model by using the sample object information of the one or more second training samples as inputs of the model training and the second sample target filter as an output of the model training. In some embodiments, the processing device may obtain the second model by training in any reasonable and feasible way, which may not be limited herein.

In some embodiments, the processing device may determine the target projection data by filtering the initial projection data using the target filter output from the second model. More descriptions may be found in FIG. 4 and related descriptions, which may not be repeated herein.

It should be noted that the above description of the process 900 is only for example and explanation, and does not limit the scope of application of this specification. For those skilled in this field, various modifications and changes can be made to the process 900 under the guidance of this manual. However, these modifications and changes are still within the scope of this manual.

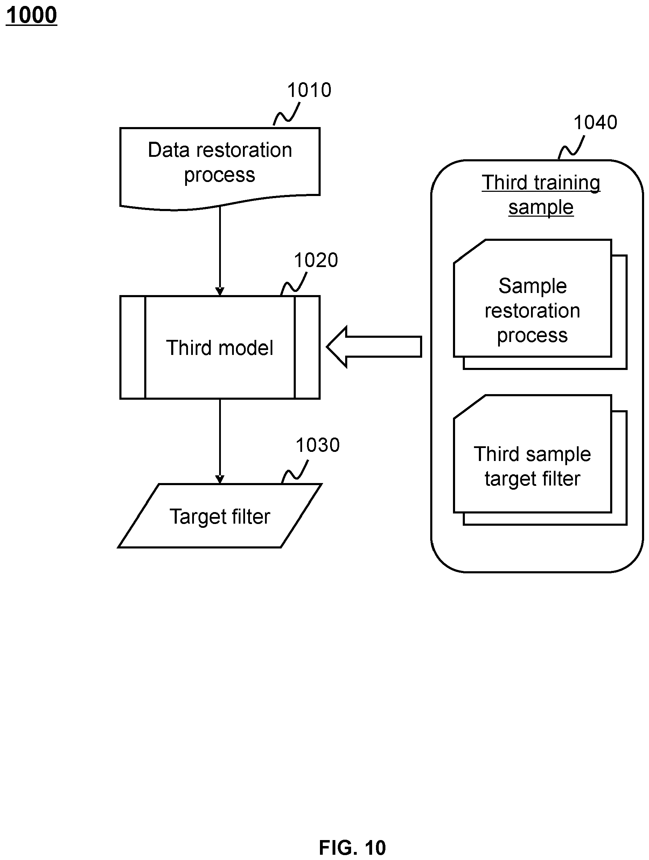

FIG. 10 is a schematic diagram illustrating an exemplary process of determining a target filter according to other embodiments of the present disclosure. In some embodiments, the process 1000 may be executed by the medical system 100 (e.g., the processing device 120 in the medical system 100), the computing device 200, or the metal artifacts correction system 300. For example, the process 1000 may be implemented as instructions (e.g., applications) and stored in a memory, such as the storage device 140 or the medical system 100, which may be accessed by the processing device 120 or the medical system 100. The processing device 120 or the metal artifacts correction system 300 may execute instructions, and when executing the instructions, the process 1000 may be performed. The diagram of operations of the process 1000 presented below is illustrative. In some embodiments, the process may be accomplished by utilizing one or more undescribed additional operations and/or one or more undescribed operations. In addition, the operation sequence of the process 1000 shown in FIG. 10 and described below is non-restrictive.

In 1010, the processing device may obtain a data restoration process corresponding to the initial projection data. The data restoration process may be related to parameters used for performing the data restoration on the metal portion. For example, the data restoration process may include manners used for performing the data restoration (e.g., an interpolation manner, a smoothing manner, a manner by using a data restoration model, etc.), types of values used during the data restoration (e.g., detector coordinate values, pixel values, etc.), a quantity of the reference data, a position of the reference data, and/or a type of reference data, or the like.

In 1020, the processing device may input the data restoration process into a trained third model. For example, the processing device may input the manners used for performing the data restoration, the types of values used during the data restoration, the quantity of the reference data, the position of the reference data, and/or the type of reference data into the third model. In some embodiments, the third model may include a machine learning model, such as CNN, fully connected neural network, RNN, or the like.

In 1030, the third model may output a corresponding target filter by analyzing and processing the data restoration process. For example, the third model may output the corresponding target filter by analyzing manners used for the data restoration, types of values used in the data restoration process, a count of the reference data, a position of the reference data, and/or types of reference data, or the like.

In some embodiments, the third model may be obtained by training based on third training samples. For example, as shown in the operation 1040, the third model may be obtained by training the initial machine learning model based on the one or more third training samples.

In some embodiments, each third training sample may include a sample restoration process and a corresponding third sample target filter. In some embodiments, the multiple third training samples may include one or more scanning positions and/or one or more lesion types. For example, the sample restoration process corresponding to the scanning position and the corresponding third sample target filter may form a third training sample. The processing device 120 may obtain sample data from multiple different scanning regions such as head, neck, chest, stomach, arms, legs, feet, or the like. In some embodiments, the multiple third training samples may correspond to one or more sample objects.

In some embodiments, the third sample target filter corresponding to the sample restoration process may be determined by evaluating the initial projection data of the sample and/or the target projection data. For example, for the same set of initial projection data, the processing device 120 may score a smoothness and/or granularity of the sample target projection data obtained through different filters, and/or score quality of the reconstructed image corresponding to the sample target projection data, and determine the third sample target filter based on the score. As another example, for the same set of initial projection data, the user may label a corresponding third sample target filter based on data frequency values of the initial projection data obtained by different sample restoration processes.

In some embodiments, the processing device may train the third initial model to obtain a trained third model by using the sample restoration processes of the one or more third training samples as inputs of the model training and the third sample target filter as an output of the model training. In some embodiments, the processing device may obtain the third model by training in any reasonable and feasible way, which may not be limited herein.

In some embodiments, the processing device may determine the target projection data by filtering the initial projection data using the target filter output from the third model. More descriptions may be found in FIG. 4 and related descriptions, which may not be repeated herein.

It should be noted that the above description of the process 1000 is only for example and explanation, and does not limit the scope of application of this specification. For those skilled in this field, various modifications and changes can be made to the process 1000 under the guidance of this manual. However, these modifications and changes are still within the scope of this manual.

FIG. 11 is a schematic diagram illustrating an exemplary process of determining a target frequency band according to some embodiments of the present disclosure.

In some embodiments, the process 1100 may be executed by the medical system 100 (e.g., the processing device 120 in the medical system 100), the computing device 200, or the metal artifacts correction system 300. For example, the process 1100 may be implemented as instructions (e.g., applications) and stored in a memory, such as the storage device 140 or the medical system 100, which may be accessed by the processing device 120 or the medical system 100. The processing device 120 or the metal artifacts correction system 300 may execute instructions, and when executing the instructions, the process 1100 may be performed. The diagram of operations of the process 1100 presented below is illustrative. In some embodiments, the process may be accomplished by utilizing one or more undescribed additional operations and/or one or more undescribed operations. In addition, the operation sequence of the process 1100 shown in FIG. 11 and described below is non-restrictive.

In 1110, a target frequency band may be determined based on at least one of object information of an object corresponding to the image to be processed, a data restoration process corresponding to the initial projection data, or the initial projection data.

In some embodiments, different types of the object information may correspond to different target frequencies. For example, objects of different age groups (e.g., infants, students, youth, middle-aged persons, and elderly persons) may correspond to the different target frequencies (e.g., a target frequency of youth being higher than a target frequency of the elderly and middle-aged person). As another example, objects of different body types (e.g., thin and weak population or obese population) may correspond to different target frequencies (e.g., a target frequency of the obese population being higher than a target frequency of the thin and weak population). As a further example, objects of different scanning positions may correspond to different target frequencies. In some embodiments, the target frequencies corresponding to different types of object information may be obtained by the user or the processing device through a large amount of historical data (e.g., scanning data corresponding to multiple sets of different object information).

In some embodiments, the processing device may input at least one of the object information corresponding to the image to be processed, the data restoration process corresponding to the initial projection data, and the initial projection data into a trained frequency band determination model. The frequency band determination model may output a corresponding target frequency through analysis and processing.

In some embodiments, when the input data includes two or more of the object information, data restoration process, and the initial projection data, the frequency band determination model may include one or more sub-models. For example, if the frequency band determination model includes a sub-model, the sub-model may analyze and process the input two or more types of data and output a corresponding target frequency. As another example, if the frequency band determination model includes two sub-models, the one of the two sub-models may analyze and process the input object information, and the other sub-model may analyze and process the input data restoration process and the initial projection data. As a further example, if the frequency band determination model includes three sub-models, the three sub-models may analyze and process the input object information, the data restoration process, and the initial projection data, respectively. In some embodiments, when the input data includes two or more of the object information, the data restoration process, and the initial projection data, the target frequency may be determined based on a preset weight value.

In some embodiments, when the frequency band determination model includes multiple sub-models, the frequency band determination model may be obtained through joint training. For example, when the input data includes two or more of the object information, the data restoration process, and the initial projection data, the processing device 120 may obtain the frequency band determination model by training the initial machine learning model based on third sample data. The third sample data may include two or more types of data corresponding to the input data, including sample object information, sample restoration process, and sample initial projection data.

In some embodiments, the frequency band determination model may include the machine learning model, such as CNN, fully connected neural network, RNN, or the like.

In 1120, the target projection data may be obtained by filtering out data higher than the target frequency band from the initial projection data. More descriptions may be found in FIG. 4 and related descriptions, which may not be repeated herein.

It should be noted that the above description of the process 1100 is only for example and explanation, and does not limit the scope of application of this specification. For those skilled in this field, various modifications and changes can be made to the process 1100 under the guidance of this manual. However, these modifications and changes are still within the scope of this manual.

FIG. 12 is a schematic diagram illustrating an exemplary process of determining a target restoring process according to some embodiments of the present disclosure.

In some embodiments, the process 1200 may be executed by the medical system 100 (e.g., the processing device 120 in the medical system 100), the computing device 200, or the metal artifacts correction system 300. For example, the process 1200 may be implemented as instructions (e.g., applications) and stored in a memory, such as the storage device 140 or the medical system 100, which may be accessed by the processing device 120 or the medical system 100. The processing device 120 or the metal artifacts correction system 300 may execute the instructions, and when executing the instructions, the process 1200 may be performed. The diagram of operations of the process 1200 presented below is illustrative. In some embodiments, the process may be accomplished by utilizing one or more undescribed additional operations and/or one or more undescribed operations. In addition, the operation sequence of the process 1200 shown in FIG. 12 and described below is non-restrictive.

In 1210, the processing device may obtain object information of the object corresponding to the image to be processed. As described above, the object information may include at least one of personal information, a scanning position, a scanning parameter, or historical scanning data. More descriptions may be found in FIG. 4 and related descriptions, which may not be repeated herein.

In 1220, the processing device may input the object information into a trained restoration process determination model.

In some embodiments, the trained restoration process determination model may include the machine learning model, such as CNN, fully connected neural network, RNN, or the like.

In 1230, the restoration process determination model may output a corresponding target restoration process by analyzing and processing the object information. In some embodiments, the target restoration process may include manners used for the data restoration (e.g., an interpolation manner, a smoothing manner, a manner by using a data restoration model, etc.), a count of reference data used in the restoration process, a position/type of reference data used in the restoration process, or any combination thereof. For example, the restoration process determination model may determine a corresponding target restoration process and output the target restoration process by analyzing personal information such as age, gender, weight, height, a scanning position, a scanning parameter, and historical scanning data in the object information. In some embodiments, the processing device may obtain the initial projection data by performing the data restoration on the metal portion of the image to be processed based on the target restoration process.

In some embodiments, the restoration process determination model may be trained based on fourth sample data. In some embodiments, the fourth sample data may include sample object information of different sample objects and a reference data restoration process corresponding to the sample object information as shown in the operation 1240. In some embodiments, the fourth sample data may include one or more scanning positions and/or one or more lesion types.

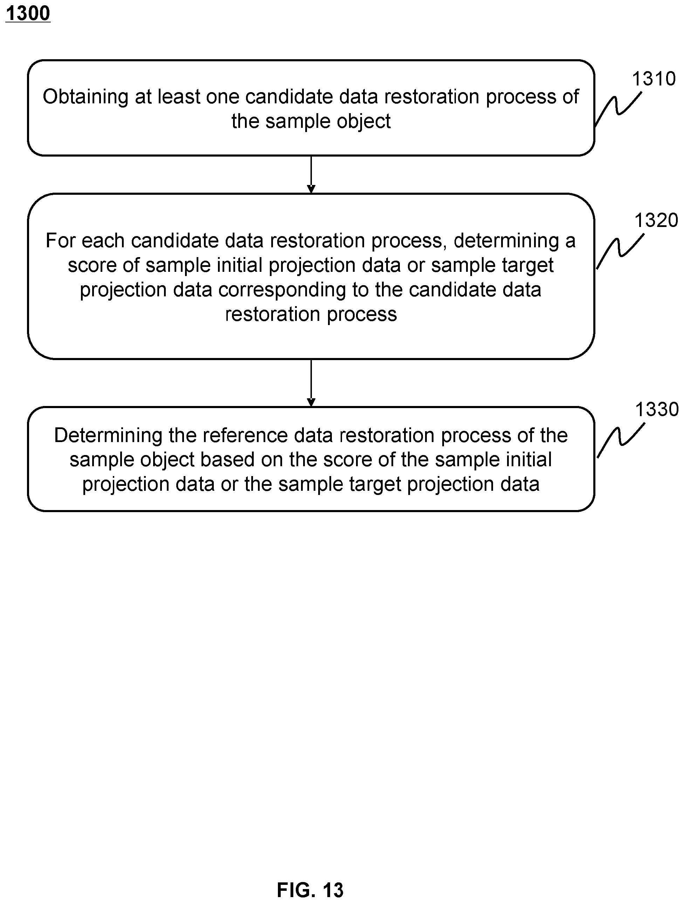

In some embodiments, as shown in FIG. 13, for each of the different sample objects, the processing device may obtain at least one candidate data restoration process. For each candidate data restoration process, the processing device may determine a score of the sample initial projection data and/or sample target projection data corresponding to the candidate data restoration process. For example, the processing device 120 may rate a smoothness and/or granularity of the sample initial projection data or quality of the reconstructed image corresponding to the sample initial projection data. As another example, the processing device 120 may rate a smoothness of the sample target projection data or the quality of the reconstructed image corresponding to the sample target projection data. In some embodiments, the rating may be automatically determined by the system or determined by the user. Further, the processing device may determine the reference data restoration process of the sample object based on the score of the sample target projection data and sample initial projection data corresponding to the candidate data restoration process. For example, the processing device 120 may select a candidate data restoration process corresponding to sample initial projection data with a highest score and determine the selected candidate data restoration process as a reference data restoration process. As another example, the processing device 120 may select a candidate data restoration process corresponding to sample target projection data with a highest score, and determine the selected candidate data restoration process as a reference data restoration process. As a further example, the processing device 120 may determine a weighted value corresponding to the candidate data restoration process based on the score of the sample initial projection data and the sample target projection data, select a candidate data restoration process with a highest weighted value, and determine the selected candidate data restoration process as a reference data restoration process.

In some embodiments, the processing device may train the initial model to obtain a trained restoration process determination module by using the sample object information of the fourth sample data as an input of the model training and the reference data restoration process as an output of the model training. In some embodiments, the processing device may obtain the restoration process determination module may be obtained by training in any reasonable and feasible way, which may not be limited herein.

It should be noted that the above description of the process 1200 is only for example and explanation, and does not limit the scope of application of this specification. For those skilled in this field, various modifications and changes can be made to the process 1200 under the guidance of this manual. However, these modifications and changes are still within the scope of this manual.

FIG. 14 is a schematic diagram illustrating an exemplary process of determining data restoration according to some embodiments of the present disclosure.

In some embodiments, the process 1400 may be executed by the medical system 100 (e.g., the processing device 120 in the medical system 100), the computing device 200, or the metal artifacts correction system 300. For example, the process 1400 may be implemented as instructions (e.g., applications) and stored in a memory, such as the storage device 140 or the medical system 100, which may be accessed by the processing device 120 or the medical system 100. The processing device 120 or the metal artifacts correction system 300 may execute the instructions, and when executing the instructions, the process 1400 may be performed. The diagram of operations of the process 1400 presented below is illustrative. In some embodiments, the process may be accomplished by utilizing one or more undescribed additional operations and/or one or more undescribed operations. In addition, the operation sequence of the process 1400 shown in FIG. 14 and described below is non-restrictive.

In 1410, a metal image may be determined based on the image to be processed.

The metal image refers to a reconstructed image of a corresponding metal portion within the target object, such as the image shown in FIG. 15(a). In some embodiments, the processing device may extract the metal image from the image to be processed through a threshold process. For example, in an CT imaging, there are significant differences in CT values between different tissues. A CT value for air may be -1000HU, a CT value for fat may be -120-90HU, a CT value of bone may be 300-2000HU, and CT values for various metals may be much greater than 2000HU, even tens of thousands. The processing device 120 may determine a corresponding metal image (e.g., an image shown in FIG. 15(a)) by segmenting CT values greater than 2000HU based on the reconstructed image (e.g., an image shown in FIG. 5(b)) through threshold segmentation. As another example, the processing device 120 may set a pixel threshold based on pixel values of different tissues in the reconstructed image and segment the metal image from the reconstructed image based on the pixel threshold. In some embodiments, the processing device may extract the metal image from the image to be processed using the trained machine learning model (e.g., a U-net model). For example, the processing device 120 may input the image to be processed into a trained U-net model, and the U-net model may output a corresponding metal image through analysis and processing.

In some embodiments, the processing device may preprocess the image to be processed and determine the metal image based on the preprocessed image. For example, the preprocessing may include but is not limited to noise reduction, bilateral filtering, or the like.

In 1420, a metal trajectory may be determined based on the metal image.

In some embodiments, the metal trajectory may include a metal trajectory sinogram. In some embodiments, the projection data of the target object may be in a form of a sinogram, as shown in FIG. 15(c). The metal trajectory sinogram refers to projection data corresponding to the metal portion, such as an image shown in FIG. 15(b). In some embodiments, the processing device may determine the metal trajectory sinogram based on the metal image using an orthographic projection process. In some embodiments, the processing device may determine the metal trajectory sinogram based on the original projection data directly. For example, the processing device 120 may determine the metal trajectory sinogram based on the projection data shown in FIG. 5(a) through processes such as threshold segmentation. As another example, the processing device 120 may input the image to be processed into a trained segmentation model; the segmentation model may output a corresponding metal trajectory sinogram directly through analysis and processing.

In 1430, the initial projection data may be obtained by performing the data restoration based on the metal trajectory.

In some embodiments, the processing device may determine projection data of a metal neighborhood region based on the metal trajectory sinogram; the initial projection data may be obtained by performing the data restoration based on the projection data of the metal neighborhood region. The metal neighborhood region refers to a region that is different from and adjacent to a region corresponding to the metal (e.g., a region adjacent to an edge of the metal trajectory in a certain range). For example, as shown in FIG. 5(a), the metal neighborhood region may be a region within 1 mm, 2 mm, or 3 mm outside an edge of the trajectory 510. For example, the processing device 120 may calculate data values in a metal region based on the data values in the metal neighborhood region, thereby obtaining the initial projection data. In some embodiments, the processing device may determine the projection data of the metal neighborhood region based on the metal trajectory sinogram by using a target restoration process (e.g., the target restoration process determined through the process 1200); the initial projection data may be obtained by performing the data restoration based on the projection data of the metal neighborhood region.

In some embodiments, the processing device may determine the projection data corresponding to the metal portion through an interpolation process. In some embodiments, the processing device may obtain the initial projection data by performing the data restoration based on the metal trajectory sinogram and the reference image. For example, the processing device 120 may fill a metal region segmented in the reconstructed image with CT values of soft tissues; the reconstructed images may be clustered after filling using a 3D K-means algorithm, and the human tissue may be clustered into air, fat, soft tissue, and bone; and the reference image may be obtained by assigning values to different clustered tissues. Further, the processing device 120 may obtain the initial projection data by determining the data corresponding to the metal region based on ortho projection data corresponding to the reference image and the metal portion.

In some embodiments, the processing device may perform high frequency data filtering during the data restoration process. For example, in the data restoration process by using the interpolation process, the processing device 120 may compare calculated restored data with a preset threshold. When the restored data is greater than the preset threshold, the processing device 120 may determine a preset standard value as the restoration data corresponding to the metal portion; otherwise, the calculated restored data may be determined as the restored data corresponding to the metal portion. The preset threshold may be determined by the user based on actual operating experience or automatically determined by the system through statistical analysis.

It should be noted that the above description of the process 1400 is only for example and explanation, and does not limit the scope of application of this specification. For those skilled in this field, various modifications and changes can be made to the process 1400 under the guidance of this manual. However, these modifications and changes are still within the scope of this manual.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, for example, an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive embodiments. This method of disclosure, however, is not to be interpreted as reflecting an intention that the claimed object matter requires more features than are expressly recited in each claim. Rather, inventive embodiments lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±1 %, ±5%, ±10%, or ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting effect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A system for metal artifacts correction, comprising:
at least one storage medium including a set of instructions; and
at least one processor in communication with the at least one storage medium, wherein when executing the set of instructions, the at least one processor is directed to cause the system to perform operations including:
obtaining an image to be processed including a metal portion;
determining initial projection data by performing data restoration on the metal portion of the image to be processed;
determining target projection data by filtering the initial projection data; and
determining a target image based on the target projection data.

2. The system of claim 1, wherein the determining the target projection data by filtering the initial projection data includes:
obtaining the target projection data by performing low-pass filtering on the initial projection data.

3. The system of claim 2, wherein the obtaining the target projection data by performing the low-pass filtering on the initial projection data includes:
obtaining restoration data corresponding to the metal portion in the initial projection data; and
obtaining the target projection data by performing the low-pass filtering on the restoration data corresponding to the metal portion.

4. The system of any one of claims 1-3, wherein the determining the target projection data by filtering the initial projection data includes:
determining a target filter based on the initial projection data; and
determining the target projection data by filtering the initial projection data using the target filter.

5. The system of any one of claims 1-4, wherein the determining the target projection data by filtering the initial projection data includes:
obtaining object information of an object corresponding to the image to be processed, the object information including at least one of personal information, a scanning position, a scanning parameter, or historical scanning data;
determining a target filter based on the object information; and
determining the target projection data by filtering the initial projection data using the target filter.

6. The system of any one of claims 1-5, wherein the determining the target projection data by filtering the initial projection data includes:
determining a target filter based on a data restoration process corresponding to the initial projection data; and
determining the target projection data by filtering the initial projection data using the target filter.

7. The system of any one of claims 1-6, wherein the determining the target projection data by filtering the initial projection data includes:
determining a target frequency band based on at least one of object information of an object corresponding to the image to be processed, a data restoration process corresponding to the initial projection data, or the initial projection data; wherein the object information includes at least one of personal information, a scanning position, a scanning parameter, or historical scanning data; and
obtaining the target projection data by filtering out data higher than the target frequency band from the initial projection data.

8. The system of any one of claims 1-7, wherein the determining the initial projection data by performing the data restoration on the metal portion of the image to be processed includes:
obtaining object information of an object corresponding to the image to be processed, wherein the object information includes at least one of personal information, a scanning position, a scanning parameter, or historical scanning data;
determining a target restoration process based on the object information; and
obtaining the initial projection data by performing the data restoration on the metal portion of the image to be processed based on the target restoration process.

9. The system of claim 8, wherein the determining the target restoration process based on the object information includes:
determining the target restoration process based on the object information using a trained restoration process determination model;
wherein the restoration process determination model is trained based on sample data, and the sample data includes sample object information of different sample objects and a reference data restoration process corresponding to the sample objection information of each sample object.

10. The system of claim 9, wherein the reference data restoration process is obtained based on the following operations:
obtaining at least one candidate data restoration process of the sample object;
for each of the at least one candidate data restoration process, determining a score of sample initial projection data or sample target projection data corresponding to the candidate data restoration process; and
determining the reference data restoration process of the sample object based on the score of the sample initial projection data or the sample target projection data.

11. The system of any one of claims 1-10, wherein the determining the initial projection data by performing the data restoration on the metal portion of the image to be processed includes:
determining a metal image based on the image to be processed;
determining a metal trajectory based on the metal image; and
obtaining the initial projection data by performing the data restoration based on the metal trajectory.

12. The system of claim 11, wherein the metal trajectory includes a metal trajectory sinogram.

13. The system of any one of claims 1-12, wherein the image to be processed includes a radiographic image.

14. A method for metal artifacts correction, implemented on a computing apparatus, the computing apparatus including at least one processor and at least one storage device, comprising:
obtaining an image to be processed including a metal portion;
determining initial projection data by performing data restoration on the metal portion of the image to be processed;
determining target projection data by filtering the initial projection data; and
determining a target image based on the target projection data.

15. A non-transitory computer readable medium, comprising a set of instructions, wherein when executed by at least one processor, the set of instructions direct the at least one processor to perform a method for metal artifacts correction, the method including:
obtaining an image to be processed including a metal portion;
determining initial projection data by performing data restoration on the metal portion of the image to be processed;
determining target projection data by filtering the initial projection data; and
determining a target image based on the target projection data.
